# EUROPÄISCHE PATENTSCHRIFT

(11) **EP 1 214 133 B1**
(45) Veröffentlichungstag und Bekanntmachung des Hinweises auf die Patenterteilung: **04.05.2005**
(21) Anmeldenummer: 00963943.6
(22) Anmeldetag: 31.08.2000
(51) Int. Cl.: B01D 35/00, B01D 36/02, C02F 9/00

(54) **SYSTEMFILTER FÜR TEICHWASSER O. DGL.**
SYSTEM FILTER FOR POND WATER OR THE LIKE
SYSTEME DE FILTRAGE POUR EAUX D'ETANG OU ANALOGUE

(30) Priorität: 03.09.1999 DE 19942188
(43) Veröffentlichungstag der Anmeldung: 19.06.2002
(73) Patentinhaber: Oase GmbH, 48477 Hörstel (DE)
(72) Erfinder: HOFFMEIER, Dieter, D-49479 Ibbenbüren (DE)
(74) Vertreter: Henze, Lothar
(86) Internationale Anmeldenummer: PCT/DE2000/002964
(87) Internationale Veröffentlichungsnummer: WO 2001/017660

(56) Entgegenhaltungen:
- US-A- 4 909 937
- US-A- 5 078 876
- US-A- 5 290 437
- US-A- 5 496 468
- US-A- 5 632 890

## Beschreibung

Die vorliegende Erfindung betrifft einen Systemfilter für Teichwasser gemäß Oberbegriff von Anspruch 1.

Aus der US-5,078,876 ist ein Teichfilter bekannt, der konzentrisch und radial zu einer zentralen Achse angeordnete Filterzonen aufweist, der eine Ausführungsform mit zentraler Anordnung einer ultravioletten Lampe offenbart und der eine Ablauföffnung aufweist, aus der Wasser ausfließen kann, das nicht an einer UV-Lampe vorbeigeströmt ist. Das zu reinigende Teichwasser muss zum Beispiel nach Austritt aus der äußeren Filterzone durch einen Strömungskanal nach oben strömen, um wieder von oben in die radial innenliegende Filterzone einzutreten. Nach Durchströmung der radial innenliegenden Filterzone tritt das Teichwasser seitlich an verschiedenen Stellen aus der zentralen innenliegenden Filterzone aus und muss wiederum in einem Strömungskanal nach oben strömen, um von oben in eine zentrale Filterzone einzutreten. Die Ausbildung der Strömungskanäle führt zu einem erheblich langen Strömungsweg ohne Filterwirkung. Zum Reinigen des Teichfilters wird diese aus einem Basisteil abgeschraubt, um dann jedes einzelne der Filterelemente herauszuziehen. Eine solche Zerlegung ist bei allen aus US-5,078,876 bekannten Ausführungsformen erforderlich, weil die Strömungskanäle zwischen den Filterzonen diese von einander völlig trennen. Die Trennung erfolgt aufgrund der Vorstellung, dass die Filterzonen nur eine optimale Filterwirkung erzielen, wenn das zu reinigende Teichwasser von oben nach unten durch einen Filter strömt.

Aus der US-A-4,909,937 ist ein Teichfilter bekannt, bei dem ebenfalls sehr viel Raum für reine Strömungskanäle ohne Filterwirkung verbraucht wird, da auch in diesem Teichfilter davon ausgegangen wird, dass die Filterwirkung nur dann optimal erzielt wird, wenn das Teichwasser von oben nach unten durch die Filterzorien strömt.

Aus den US-A-5,632,890, US-A-5,290,437 und US-A-5,496,468 sind ebenfalls Teichfilter bekannt, in denen aber eine Strömung von unten nach oben gegen die Schwerkraft nicht offenbart ist.

Aus der GB 2 292 696 ist ein Teichfilter bekannt, in weichem zwei Filtermedien nicht konzentrisch zueinander sondern vertikal übereinander angeordnet sind. Das untere Filtermedium ist ein Schaummaterial und das obere Filtermedium ist ein kömiges Filtermedium. Der Strömungsweg verläuft zwar im wesentlichen von unten nach oben, über die Wirkungsweisen als Nitrifikationszone und Denitrifikationszone ist allerdings nichts offenbart. Es ist somit auch nicht offenbart, dass der Strömungsweg insbesondere in der Denitrifikationszone von unten nach oben verlaufen soll.

Aus der US 3,883,428 ist ein kleiner Trinkwasserfilter für Yachten und Wohnmobile bekannt, in welchem ein erstes mechanisches und ein zweites chemisches Filtermedium konzentrisch zueinander angeordnet sind und der Strömungsweg durch das zweite Filtermedium von unten nach oben verläuft. Das erste Filtermedium besteht aus Fasern und dient zur Grobfilterung und das zweite Filtermedium soll ein chemisches Mittel sein, vorzugsweise aktivierter Kohlenstoff. Ein solcher Trinkwasserfilter ist nicht für den Einsatz als Teichfilter geeignet. Darüber hinaus muss ein Trinkwasserfilter ganz anders wirken als ein Teichfilter und weist deshalb insbesondere keine Nitrifikationszone und Denitrifikationszone auf.

Die Aufgabe der vorliegenden Erfindung ist daher, ein Systemfilter für Teichwasser zu schaffen, der eine einfache Reinigung desselben und eine Platz sparende Bauweise desselben zulässt.

Die Aufgabe wird durch die kennzeichnenden Merkmale des Anspruchs 1 gelöst.

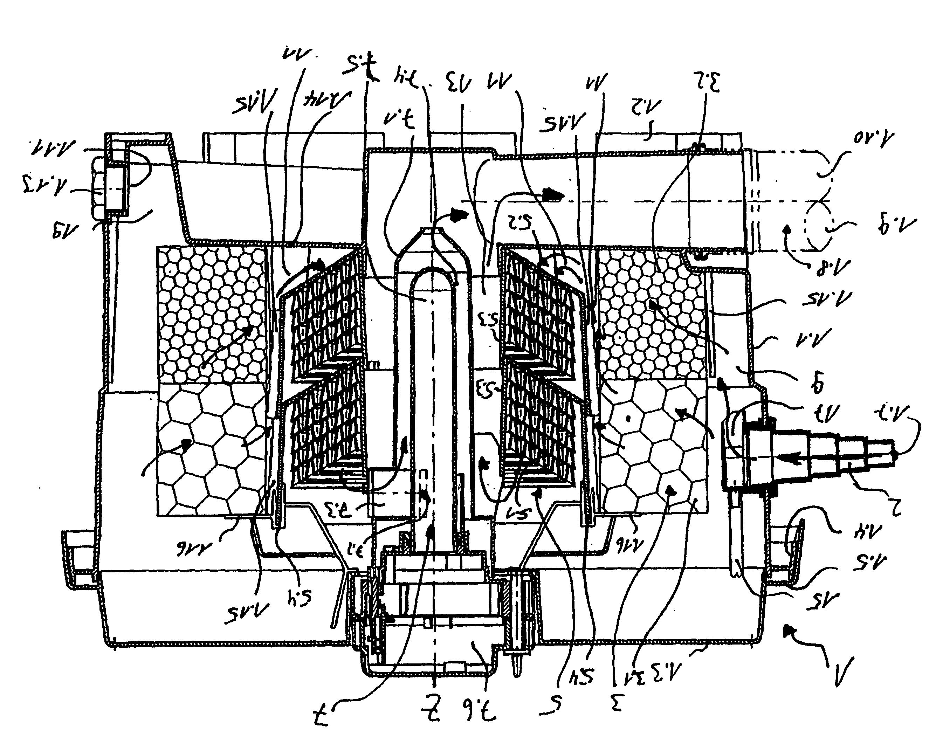

Eine Ausführungsform der vorliegenden Erfindung wird im folgenden anhand der Zeichnungen näher beschrieben. Die einzige Figur zeigt einen Längsschnitt durch einen schematisch dargestellten erfindungsgemäßen Systemfilter.

Der Systemfilter 1 umfasst ein Gehäuse 1.1. Bodenseitig sind Abstützelemente 1.2 oder Füße ausgebildet. An der Oberseite ist das Gehäuse 1.1 offen und durch eine Abdeckung 1.3 lösbar zu verschließen. Im Betrieb ist die Abdeckung 1.3 auf dem Gehäuse 1.1 befestigt. Die Befestigung erfolgt durch übliche Rast- und Klemmmittel. In der vorliegenden Ausführungsform ist am Umfangsrand des Gehäuses 1.1 ein Gehäuseansatz 1.4 ausgebildet, über den ein entsprechender Deckelansatz 1.5 übergreift. Der Deckelansatz 1.5 ist elastisch vorgespannt und hakt mit einem Vorsprung 1.6 unter einer Unterkante des Deckelansatzes 1.5 fest. Durch ein leichtes Nachaußenziehen des Deckelansatzes 1.5 löst sich der Vorsprung 1.6 von der Unterkante und gibt die Abdeckung 1.3 frei.

Über die geöffnete Oberseite des Gehäuses 1.1 wird der Zugriff auf die im Gehäuse 1.1 angeordneten und weiter unten beschriebenen Bauteile möglich.

Das Gehäuse 1.1 weist zudem eine Einlauföffnung 1.7 auf, durch die zu filterndes Teichwasser in den Systemfilter 1 einströmen kann. Die Einlauföffnung 1.7 ist mit einem Stutzen 2 versehen, der sich nach außen vorzugsweise stufenartig verjüngt, so dass ein Schlauch (nicht dargestellt) auf diesen fest aufgeschoben werden kann. Die Einlauföffnung 1.7 kann aber auch mit anderen gängigen Einrichtungen zur Fixierung eines Schlauches, Rohres oder einer sonstigen Zuleitung versehen sein.

Das Gehäuse 1.1 weist zudem eine Wasser-Ablauföffnung 1.8 auf, aus der das filtrierte Wasser wieder in den Teich abgegeben wird. Die Wasser-Ablauföffnung 1.8 ist in der vorliegenden Ausführungsform mehrkanalig ausgebildet, derart, dass ein erster Kanal 1.9 und ein zweiter Kanal 1.10 das filtrierte Wasser in unterschiedliche Richtungen in den Teich leiten. Die Kanäle 1.9 und 1.10 sind vorzugsweise in einer horizontalen Ebene zueinander verdreht angeordnet. Dadurch wird eine bessere Einströmcharakteristik des filtrierten Wassers in den Teich ermöglicht.

Das Gehäuse 1.1 weist zudem eine Ablassöffnung 1.11 für das Filtergut auf. Das Filtergut besteht im wesentlichen aus sogenanntem Bioschlamm. Die Ablassöffnung 1.11 ist mit einem Verschlusselement 1.13 verschließbar. Eine solches Verschlusselement 1.13 kann z. B. ein Schraubverschluss oder Steckverschluss sein. Das Verschlusselement 1.13 wird bedarfsweise geöffnet, um das Filtergut zu entnehmen. Es ist auch denkbar, das Filtergut über eine entsprechende Anschlussvorrichtung kontinuierlich abzusaugen.

Das Gehäuse 1.1 kann einen beliebigen Querschnitt aufweisen. In der vorliegenden Ausführungsform ist der Querschnitt aber rund und weist eine zentrale Achse Z auf. Im Inneren des Gehäuses 1.1 sind von außen nach innen, zur Achse Z hin, mehrere Filterzonen 3, 5, 7 konzentrisch angeordnet. Jede Filterzone 3, 5, 7 kann in Richtung der Achse Z in weitere Filterstufen unterteilt sein. In der vorliegenden Ausführungsform sind drei Filterzonen 3, 5, 7 dargestellt, wobei die Filterzone 3 in Richtung der Achse Z in eine erste Filterstufe 3.1 und eine zweite Filterstufe 3.2 unterteilt ist.

Die Filterzone 3 ist eine Nitrifikationszone und umfasst in der ersten Filterstufe 3.1 einen großporigen Filterschaum und in der zweiten Filterstufe 3.2 einen feinporigen Filterschaum. Die Filterzone 3 wird bodenseitig durch die Oberseite Wasser-Ablauföffnung 1.8 und durch entsprechenden Stützelemente 1.14 begrenzt, auf die sich der Filterschaum abstützt. Seitlich begrenzen konzentrische Stützelemente 1.15 die Filterzone 3. Oberseitig wird die Filterzone 3 durch einen Niederhalter 1.16 begrenzt, der den Filterschaum zwischen dem Boden 1.14 und den Stützelementen 1.15 in Position hält. Die Befestigung des Niederhalters 1.16 wird weiter unten beschrieben.

Der Filterschaum ist ein allgemein bekannter Schaum mit offenen Poren mit definiertem Porenvolumen.

Jedes radial außenliegende Stützelement 1.15 ist in Abstand zu der Innenwand des Gehäuses 1.1 angeordnet, so dass zwischen dem Stützelement 1.15 und der Innenwand eine Strömungskanal 9 (siehe Pfeile links) für durch den Einlauf 1.7 einströmendes Teichwasser ausgebildet ist. In dem der Filterzone 3 werden grobe und gröbere Festbestandteile zurückgehalten.

Zwischen den innenseitigen Stützelementen 1.15 und der Filterzone 5 ist ein Strömungskanal 11 für grobgereinigtes Teichwasser ausgebildet. Zur Bildung des Strömungskanals 11 sind die innenliegenden Stützelemente 1.15 stufenförmig nach unten, in Richtung Boden, zurückspringend ausgebildet.

Die Filterzone 5 ist eine Denitrifikationszone und ebenfalls in Richtung der Achse Z in zwei Filterstufen 5.1 und 5.2 unterteilt. Jede Filterstufe 5.1 und 5.2 ist nach außen, d. h., zur Filterzone 3 hin durch eine Halterung 5.3 begrenzt, an deren Außenseite die innenseitigen Stützelemente 1.15 der Filterzone 3 befestigt sind. Eine äußere Begrenzung der Halterung 5.3 ist von oben nach unten, also in Richtung Boden, ein wenig von außen nach innen geneigt, um dadurch die Bildung des Strömungskanals 11 zu unterstützen. Eine innere Begrenzung der Halterung 5.3 ist gegenüber der äußeren Begrenzung der Halterung 5.3 horizontal zum Boden hin versetzt, so dass eine bodenseitige Begrenzung mit der inneren Begrenzung einen spitzen Winkel bildet. Der dadurch mit dem in etwa horizontalen Stützelement 1.14 bzw. der Oberseite der Ablauföffnung 1.8 gebildete Zwickel dient als eine Erweiterung des Strömungskanals 11.

Die Halterung 5.3 ist mit der bodenseitigen Begrenzung, d. h., mit der Winkelspitze auf dem Stützelement 1.14 bzw. auf der Ablauföffnung 1.8 abgestützt. Auf einem freien Ende 5.4 der äußeren Begrenzung der Halterung 5.3 der Filterstufe 5.1 ist der Niederhalter 1.16 mit Hilfe eines Rastmechanismus mit Spannung nach außen aufgesetzt. Die Halterung 5.3 ist mit einem ersten Halterungsteil der Filterstufe 5.1 in ein nach oben offenes zweites Halterungsteil der Halterung 5.3 der unteren Filterstufe 5.2 eingesteckt. Dadurch ergibt sich auch die leichte Schrägstellung der äußeren Begrenzung der beiden Halterungsteile der Halterung 5.3.

In der Halterung 5.3 ist eine Flächenfilterelement 5.5 angeordnet mit großer Filteroberfläche. Dieses Flächenfilterelement 5.5 besteht aus mehreren Reihen von winkelförmig zueinander und gegeneinander ausgerichteter Bioflächenteile durch die das Teichwasser langsam hindurchströmt. Durch Ausgasung kommt es zur Verflüchtigung von Nitrat.

Die bodenseitige Begrenzung der Halterung 5.3 ist wasserdurchlässig, wie die Bioflächenteile.

Aus der offenen Oberseite des ersten Halterungsteils der Halterung 5.3 der oberen Filterstufe 5.1 tritt das Teichwasser aus und strömt in einen zentralen Strömungskanal 13.

Im Zentrum des Gehäuses 1.1 ist die dritte Filterzone 7 durch eine Innenwandung 7.1 konzentrisch zur zentralen Achse Z begrenzt. Der Strömungskanal 13 wird von der äußeren Begrenzung der Halterung 5.3 der zweiten Filterzone 5 und der Außenseite der Innenwandung 7.1 begrenzt. Die Innenwandung 7.1 weist in einem oberen Umfangsbereich 7.2, in etwa in der horizontalen Höhe der oberen Filterstufen 3.1 und 5.1 eine Eintrittsöffnung 7.3 auf, durch die eine Teilmenge des in dem Strömungskanal 13 strömenden Teichwassers in die Filterzone 7 einströmen kann. Die Innenwandung 7.1 weist bodenseitig, etwa in horizontaler Höhe der Ablauföffnung 1.8, eine Austrittsöffnung 7.4 auf, aus der das Teichwasser aus der Filterzone 7 in die Kanäle 1.9 und 1.10 der Ablauföffnung 1.8 ausströmen kann.

Die Innenwandung 7.1 umschließt einen Raum, in welchem zentral eine UVC-Lampe 7.5 angebracht ist, die von dem Teichwasser allseitig umströmt werden kann. Die UVC-Lampe 7.5 erzeugt im Betrieb ein UV-Licht der C-Welle. Das UVC-Licht dient der Entkeimung des ansonsten bereits gereinigten Teichwassers. Die UVC-Lampe 7.5 sitzt am oberen Ende in einer Lampenhalterung 7.6.

Die Abdeckung 1.3 weist in ihrem Zentrum eine Öffnung 1.15 auf, in welcher die Lampenhalterung 7.6 mit an sich bekannten Verschlussmechanismen festgesetzt werden kann. Die Lampenhalterung 7.6 kann also ohne Öffnung der Abdeckung 1.3 gelöst werden, um diese zusammen mit der UVC-Lampe 7.5 aus der Filterzone 7 zu entnehmen. In der Nähe der UVC-Lampe 7.5 ist an den Stellen, die während ihres Betriebes versehentlich sichtbar werden können mit einem Sichtschutz 7.6 abgeblendet.

Es ist femer eine optische Kontrolleinrichtung vorgesehen, mit der die ordnungsgemäße Funktionsweise der UVC-Lampe überwacht werden kann. Solche Kontrolleinrichtungen sind allgemein bekannt und können z. B. über ein Spiegelsystem verwirklicht werden, das dem Benutzer außerhalb des Gerätes den Leuchtzustand anzeigt. Es können auch Lichtleiter verwendet werden, um das Vorhandensein eines Lichtes der UVC-Lampe anzuzeigen.

Im praktischen Betrieb strömt Teichwasser über die Einlauföffnung 1.8 in den Strömungskanal 9, wobei oberhalb der Einlauföffnung 1.8 eine Luftansaugeinrichtung 15 angeordnet ist, die mit einer schwenkbaren Einlaufmuschel 17 in Verbindung steht. Die Einlaufmuschel 17 ist unmittelbar hinter der Einlauföffnung 1.8 angeordnet, so dass das einströmende Wasser in Drehung (Fliehkraft-Vortex-System) versetzt wird.

Das einströmende Wasser gelangt dann der Pfeilrichtung folgend in die erste Filterzone 3, dringt durch diese hindurch in den Strömungskanal 11. Von dort wird das Wasser von unten durch die Filterzone 5 nach oben gedrückt und tritt oben in den Strömungskanal 13 ein. Die Hauptmenge des Wassers fließt den Strömungskanal 13 nach unten und von dort in die kanalförmige Erweiterung der Ablauföffnung 1.8, um durch einen der Kanäle 1.9 oder 1.10 wieder in den Teich auszutreten. Eine Teilmenge des Wassers tritt durch die Eintrittsöffnung 7.3 in die Filterzone 7 ein und umströmt die UVC-Lampe 7.5, um dann durch die Austrittsöffnung 7.4 in die kanalförmige Erweiterung der Ablauföffnung 1.8 einzutreten und durch einen der Kanäle 1.9 oder 1.10 in den Teich auszuströmen.

Die Feststoffe, die bereits von der ersten Filterzone 3 zurückgehalten werden, sammeln sich in einem Raum 19, der unterhalb des Strömungskanals 9 wenigstens teilweise ausgebildet ist und über die Ablassöffnung 1.11 eine verschließbare Verbindung nach außen aufweist.

## Patentansprüche

1. Systemfilter für Teichwasser, mit einem Gehäuse (1.1), das eine Einlauföffnung (1.7) für verschmutztes Teichwasser und eine Ablauföffnung (1.8) für weitestgehend gereinigtes Teichwasser aufweist, mit einer zentralen Achse (Z) und mit einer ersten Filterzone (3) und einer zweiten Filterzone (5), die konzentrisch zur zentralen Achse (Z) und radial zueinander angeordnet sind und sich von einer bodenseitigen Halterung (1.14; 5.3) aus über wenigstens einen Abschnitt entlang der zentralen Achse (Z) im Gehäuse (1.1) erstrecken, wobei die erste Filterzone (3) in einem größeren radialen Abstand zur Achse (Z) liegt, als die zweite Filterzone (5), und mit einem vorbestimmten Strömungsweg des Teichwassers durch die erste Filterzone (3) und die zweite Filterzone (5),
**dadurch gekennzeichnet,**
**dass** die erste Filterzone (3) eine Nitrifiktationszone ist und eine erste Filterstufe (3.1) aus einem großporigen Schaum und eine zweite Filterstufe (3.2) aus einem feinporigen Schaum aufweist, dass die zweite Filterzone (5) eine Denitrifikationszone ist, die winkelförmig zueinander und gegeneinander ausgerichtete Bioffächenteile aufweist und in zwei in Strömungsrichtung nacheinander angeordnete Filterstufen (5.1, 5.2) unterteilt ist, und dass der vorbestimmte Strömungsweg des Teichwassers durch die erste Filterzone (3) von einer Einlauföffnung (1.7) zu einem Strömungskanal (11) verläuft und von dem Strömungskanal (11) aus durch die zweite Filterzone (5) von unten nach oben verläuft und von einer oberen Filterstufe (5.1) der Filterzone (5) in einen Strömungskanal (13) nach unten verläuft.

2. Systemfilter nach Anspruch 1,
**dadurch gekennzeichnet,**
**dass** in dem Strömungskanal (13) eine UVC-Lampe (7.5) angeordnet ist.

3. Systemfilter nach Anspruch 2,
**dadurch gekennzeichnet,**
**dass** der Strömungskanal (13) von einer die UVC-Lampe (7.5) umschließenden Innenwandung (7.1) begrenzt ist, in welcher eine Eintrittsöffnung (7.3) und eine Austrittsöffnung (7.4) ausgebildet sind, derart, dass sich der Strömungsweg des Teichwassers in einen durch den Strömungskanal (13) fließenden Hauptstrom und einen durch die Eintrittsöffnung (7.3) an der UVC-Lampe (7.5) vorbei fließenden Teilstrom teilt.

4. Systemfilter nach einem der Ansprüche 1 bis 3,
**dadurch gekennzeichnet,**
**dass** die erste Filterzone (3) bodenseitig durch Stützelemente (1.4), seitlich durch konzentrische Stützelemente (1.15) und oberseitig durch einen Niederhalter (1.16) abgestützt ist.

5. Systemfilter nach einem der Ansprüche 1 bis 4,
**dadurch gekennzeichnet,**
**dass** die zweite Filterzone (5) durch eine Halterung (5.3) begrenzt ist, die mit einem freien Ende (5.4) in den Niederhalter (1.16) gesteckt ist.

6. Systemfilter nach einem der Ansprüche 2 bis 5,
**dadurch gekennzeichnet,**
**dass** die UVC-Lampe (7.5) in einer Lampenhalterung (7.6) sitzt, die zusammen mit der UVC-Lampe (7.5) aus dem Gehäuse (1.1) lösbar ist.

7. Systemfilter nach einem der Ansprüche 1 bis 7,
**dadurch gekennzeichnet,**
**dass** oberhalb der Einlauföffnung (1.7) eine Luftansaugeinrichtung (15) angeordnet ist, die mit einer schwenkbaren Einlaufmuschel (17) in Verbindung steht, welche bei Einströmen des Teichwassers dieses in Drehung versetzt.

## Claims

1. System filter for pond water, having a housing (1.1) which has an inlet opening (1.7) for dirty pond water and an outlet opening (1.8) for extensively purified pond water, having a central axis (Z) and having a first filter zone (3) and a second filter zone (5) which are disposed concentrically relative to the central axis (Z) and radially relative to each other and extend in the housing (1.1) from a base-side mounting (1.14; 5.3) across at least one portion along the central axis (Z), the first filter zone (3) being situated at a larger radial spacing relative to the axis (Z) than the second filter zone (5), and having a predetermined flow path of the pond water through the first filter zone (3) and the second filter zone (5),
**characterised in that**
the first filter zone (3) is a nitrification zone and has a first filter step (3.1) made of a large-pored foam and a second filter step (3.2) made of a fine-pored foam, **in that** the second filter zone (5) is a denitrification zone which has bioface parts, which are orientated at an angle towards each other and away from each other, and is subdivided into two filter steps (5.1, 5.2) which are disposed one after the other in the flow direction, and **in that** the predetermined flow path of the pond water through the first filter zone (3) extends from an inlet opening (1.7) to a flow channel (11) and extends from the flow channel (11) through the second filter zone (5) from the bottom to the top and extends downwardly from an upper filter step (5.1) of the filter zone (5) into a flow channel (13).

2. System filter according to claim 1,
**characterised in that**
a UVC lamp (7.5) is disposed in the flow channel (13).

3. System filter according to claim 2,
**characterised in that**
the flow channel (13) is delimited by an internal wall (7.1) which encloses the UVC lamp (7.5), in which internal wall there are configured an entrance opening (7.3) and an exit opening (7.4), such that the flow path of the pond water divides into a main flow which flows through the flow channel (13) and into a partial flow which flows through the entrance opening (7.3) past the UVC lamp (7.5).

4. System filter according to one of the claims 1 to 3,
**characterised in that**
the first filter zone (3) is supported on the base side by support elements (1.4), laterally by concentric support elements (1.15) and on the upper side by a holding-down device (1.16).

5. System filter according to one of the claims 1 to 4,
**characterised in that**
the second filter zone (5) is delimited by a mounting (5.3) which is inserted by one free end (5.4) into the holding-down device (1.16).

6. System filter according to one of the claims 2 to 5,
**characterised in that**
the UVC lamp (7.5) sits in a lamp mounting (7.6) which together with the UVC lamp (7.5) can be detached from the housing (1.1).

7. System filter according to one of the claims 1 to 7,
**characterised in that**,
above the inlet opening (1.7), there is disposed an air intake device (15) which is connected to a pivotable inlet shell (17) which during inflow of the pond water sets the latter in rotational motion.

## Revendications

1. Filtre système pour pièces d'eau, comportant un boîtier (1.1), lequel présente une ouverture d'admission (1.7) pour l'eau polluée et une ouverture de sortie (1.8) pour l'eau largement épurée, un axe central (Z) et une première zone de filtration (3) ainsi qu'une seconde zone de filtration (5), lesquelles sont agencées de manière concentrique par rapport à l'axe central (Z) et de manière radiale l'une par rapport à l'autre et s'étendent depuis un support (5.3) du côté fond sur au moins une partie le long de l'axe central (Z) dans le boîtier (1.1), la première zone de filtration (3) étant située à une plus grande distance radiale de l'axe (Z) que la seconde zone de filtration (5), et un trajet d'écoulement prédéterminé de l'eau à travers la première zone de filtration (3) et la seconde zone de filtration (5),
**caractérisé en ce que** la première zone de filtration (3) est une zone de nitrification et présente un premier étage de filtration (3.1) en mousse à grands pores et un second étage de filtration (3.2) en mousse à pores fins, **en ce que** la seconde zone de filtration (5) est une zone de dénitrification qui présente des éléments à biosurfaces agencés de façon angulaire entre eux et à l'opposé les uns des autres et qui est divisée en deux étages de filtration (5.1, 5.2) agencés l'un après l'autre dans le sens d'écoulement, et **en ce que** le trajet d'écoulement prédéterminé de l'eau passe :
- à travers la première zone de filtration (3), d'une ouverture d'admission (1.7) à un canal d'écoulement (11),
- et, de bas en haut, depuis le canal d'écoulement (11) à travers la seconde zone de filtration (5),
- et, vers le bas, d'un étage de filtration supérieur (5.1) de la zone de filtration (5) dans un canal d'écoulement (13).

2. Filtre système selon la revendication 1,
**caractérisé en ce qu'**une lampe UVC (7.5) est agencée dans le canal d'écoulement (13).

3. Filtre système selon la revendication 2,
**caractérisé en ce que** le canal d'écoulement (13) est délimité par une paroi intérieure (7.1) entourant la lampe UVC (7.5), paroi dans laquelle sont réalisées une ouverture d'admission (7.3) et une ouverture de sortie (7.4), de telle manière que la trajectoire d'écoulement de l'eau se divise en un flux principal s'écoulant à travers le canal d'écoulement (13) et en un flux partiel s'écoulant à travers l'ouverture d'admission (7.3) en passant devant la lampe UVC (7.5).

4. Filtre système selon l'une des revendications 1 à 3,
**caractérisé en ce que** la première zone de filtration (3) est supportée, côté fond, par des éléments d'appui (1.4), latéralement, par des éléments d'appui concentriques (1.15) et, en haut, par un élément de compression (1.16).

5. Filtre système selon l'une des revendications 1 à 4,
**caractérisé en ce que** la seconde zone de filtration (5) est délimitée par un support (5,3) qui est enfiché avec une extrémité libre (5.4) dans l'élément de compression (1.16).

6. Filtre système selon l'une des revendications 2 à 5,
**caractérisé en ce que** la lampe UVC (7.5) repose dans un support de lampe (7.6) qui peut être détaché en même temps que la lampe UVC (7.5) et sorti du boîtier (1.1).

7. Filtre système selon l'une des revendications 1 à 7,
**caractérisé en ce que**, au-dessus de l'ouverture d'admission (1.7), est agencé un dispositif d'aspiration d'air (15) qui communique avec une coquille d'admission pivotante (17), laquelle imprime un mouvement de rotation à l'eau lors de son admission.
